# FASCICULE DE BREVET EUROPEEN

(11) **EP 3 238 519 B1**
(45) Date de publication et mention de la délivrance du brevet: **06.09.2023**
(21) Numéro de dépôt: 17168792.4
(22) Date de dépôt: 28.04.2017
(51) Int. Cl.: A01C 7/04, A01C 7/12

(54) **DISPOSITIF DE RÉGULATION DE LA DISTRIBUTION DE GRAINES POUR SEMOIR, ET SEMOIR CORRESPONDANT**
REGULIERVORRICHTUNG DER VERTEILUNG VON SAMEN FÜR SÄMASCHINE, UND ENTSPRECHENDE SÄMASCHINE
DEVICE FOR CONTROLLING SEED DISTRIBUTION FOR SEEDER, AND CORRESPONDING SEEDER

(30) Priorité: 28.04.2016 FR 1653847
(43) Date de publication de la demande: 01.11.2017
(73) Titulaire: Burel Production, 35220 Chateaubourg (FR)
(72) Inventeur: CLOCHARD, Daniel, 35113 Domagné (FR); LEGAIGNOUX, Nicolas, 35200 Rennes (FR)
(74) Mandataire: Vidon Brevets & Stratégie

(56) Documents cités:
- EP-A1- 0 076 219
- CA-A1- 2 814 221
- DE-B- 1 051 047
- DE-C- 254 520
- FR-A1- 2 273 462
- NL-A- 7 711 872
- US-A- 5 549 060

## Description

### 1. Domaine de l'invention

Le domaine de l'invention est celui des semoirs en ligne, notamment pour le semis de céréales ou de légumineuses.

L'invention concerne plus précisément l'amélioration de la répartition sur le sol des graines au moment de leur distribution, et concerne notamment la régulation de la distribution, en aval d'un dispositif de distribution et de dosage d'un élément semeur. On entend ici par « graines » des semences, et plus généralement toutes particules susceptibles d'être distribuées de la même façon, par exemple des particules d'engrais ou de protection des semis (anti-limaces par exemple).

### 2. Art antérieur et ses inconvénients

Dans le cadre de l'agriculture de précision, il est souhaitable que la distribution des graines, pendant les semis, soit la plus régulière et la plus précise possible. Il est généralement souhaité que les graines soient déposées dans un sillon, à intervalles réguliers, sans manque ni doublon.

Dans ce but, il a été développé des semoirs de précision, souvent appelés semoirs monograine. Ces semoirs monograine sont prévus pour semer spécifiquement un type de graines prédéterminé (maïs, betterave,...). Ils sont utilisés pour des cultures d'inter-rang supérieur à 25 cm. Chaque rang est généralement alimenté en graines par une trémie individuelle reliée à ses propres organes de distribution, d'enterrage et de rappuyage. Ces semoirs sont efficaces, mais au prix d'une complexité relativement importante. Ils disposent de moyens spécifiques, aptes à saisir des graines Ils sont encombrants, nécessitent de nombreux réglages, un apport en énergie (notamment pneumatique, pour fournir une dépression permettant de maintenir les graines une à une) adapté, et nécessitent des graines utilisées devant être précisément calibrées. Les semoirs monograine sont en conséquence coûteux, et réservés à certaines situations particulières.

De plus, les semoirs monograine manquent de polyvalence, et présentent notamment un encombrement tel qu'ils ne permettent pas de réaliser les semis de certaines graines, par exemple du blé, pour lesquelles un écartement inter-rang inférieur à 25 cm est souhaité.

Il existe par ailleurs des semoirs « multigraine », ou « en ligne », utilisés notamment pour les céréales, telles que le blé ou l'avoine. Ils permettent également de réaliser des semis directs, les graines étant distribuées à chaque élément semeur par l'intermédiaire d'un dispositif de dosage et de transport, alimenté par une trémie contenant les graines et dirigeant les graines vers le sol via un conduit de transfert. Un tel dispositif de dosage est généralement placé sous la trémie, et est équipé d'une ou plusieurs roues munies d'alvéoles ou de dents formant des ergots, aptes à recevoir un volume déterminé de graines (les roues étant adaptées au type de graine à semer).

Ces systèmes de dosage et de transport, dont un exemple est illustré par le document DE1051047, sont prévus pour permettre que les semences soient éjectées d'une manière relativement régulière dans le conduit de transfert de façon à assurer leur répartition homogène, en ligne, dans le sol. Toutefois, on constate en pratique qu'il existe, sur une longueur de sillon, des zones où les graines sont absentes ou au contraire déposées par paquets. Cette répartition irrégulière des graines se traduit par une répartition irrégulière des plants, et donc par une perte de rendement pour l'agriculteur.

Ainsi, alors que la précision des semis avec un semoir monograine peut atteindre 90 à 95% de graines bien placées, elle reste généralement en dessous de 40% avec un semoir en ligne.

Pour améliorer la précision de ces semoirs en ligne, le déposant a proposé, pour répartir les semences de façon plus homogène, de réguler la distribution des graines en ajoutant un réservoir tampon disposé sur le chemin des graines, entre le dispositif de dosage et de transport et l'extrémité du conduit, à proximité du sol. Cette approche est notamment décrite dans le document de brevet FR2691040, qui présente ainsi un système de régulation mettant en oeuvre une pluralité de diabolos disposés à la sortie du dispositif de dosage. Les diabolos saisissent les graines dès la sortie du doseur par l'intermédiaire d'une goulotte d'approvisionnement qui sert de réserve tampon, pour amortir l'effet des arrivées par paquets et des lacunes de graines. La forme en V du diabolo permet de rassembler et d'emprisonner les graines pour les aligner les unes à la suite des autres, avec une meilleure précision.

Toutefois, le dispositif de régulation est sensible aux secousses. Il doit être placé à la suite immédiate du doseur, et reste donc éloigné du sol. De ce fait, une grande partie du gain de régularité de distribution des graines se trouve ici aussi annulé durant le transport de la graine entre la sortie du régulateur et le sol. En outre, des blocages de graines peuvent apparaître dans un diabolo, réintroduisant des manques, suivis de paquets au moment de la libération.

Il existe donc un besoin d'une régulation plus efficace, pour les semoirs en ligne, permettant de limiter les pertes de régularité de distribution des graines, sans faire appel aux moyens complexes des semoirs monograine, et notamment à des moyens pneumatiques pour maintenir les graines.

En particulier, il est souhaitable d'améliorer la précision des semoirs classiques, pour se rapprocher de la précision des semoirs monograine, sans la complexité et l'encombrement de ces derniers.

On connaît par ailleurs des systèmes aptes aux semis en poquets (DE254520 ou EP0076219 par exemple), mettant en oeuvre des roues dentées dont chaque dent est adaptée prendre systématiquement plusieurs graines (poquets), et délivre ces graines « en lot »_{.} Un autre exemple d'un semoir monograine est connu de NL 7 711 872 A. Ces systèmes, adaptés à certaines cultures, s'opposent à l'objectif de l'invention de délivrer des graines une à une, de façon la plus régulière possible.

### 3. Exposé de l'invention

L'invention répond à ce besoin en proposant un dispositif de régulation pour semoir, destiné à alimenter en graines un élément semeur d'un semoir et destiné à être monté en aval de moyens de dosage et de transport des graines, ledit dispositif de régulation comprenant une zone de réserve, alimentée en graines via une entrée d'alimentation connectée auxdits moyens de dosage et de transport.

Selon l'invention, le dispositif de régulation comprend une entrée reliée auxdits moyens de dosage et de transport et une sortie reliée audit élément semeur.

Selon l'invention, le dispositif de régulation comprend en outre une roue apte à prélever des graines dans ladite zone de réserve, au moyen d'au moins une rangée de dents, chaque dent étant configurée pour assurer un prélèvement d'une unique graine dans ladite zone de réserve, et présentant:
- une surface sensiblement plane, s'étendant sur une longueur L et formant toboggan le long duquel ladite unique graine glisse progressivement jusqu'à sa libération;
- un logement définissant sensiblement un demi-cercle de rayon Ri et tangent au toboggan de la dent précédente, ledit logement (35) étant configuré pour maintenir ladite unique graine puis la guider vers ledit toboggan;
- une pointe formant un bec, dont la partie supérieure définit sensiblement une portion d'ellipse recourbée vers ladite roue dans le prolongement dudit toboggan, et la partie inférieure correspond à une portion supérieure dudit logement,
le rayon Ri étant compris entre 1 et 10 mm et ladite longueur L valant au moins le triple dudit rayon Ri.

Ainsi, en considérant comme référence un rayon de la roue s'étendant verticalement vers le bas, on peut distinguer les secteurs angulaires suivants (dont les plages peuvent légèrement varier, en fonction des mises en oeuvre) :
- lorsque la dent se trouve dans un premier secteur angulaire compris sensiblement entre 0 et 90°, ladite pointe guide une graine présente dans la zone de réserve vers ledit logement ;
- lorsque la dent se trouve dans un secteur angulaire compris sensiblement entre 20 et 180°, ledit logement reçoit et maintient ladite graine ;
- lorsque la dent se trouve dans un secteur angulaire compris sensiblement entre 180 et 310°, ladite graine glisse progressivement le long du toboggan de la dent précédente ;
- au-delà, la graine est libérée.

La présence d'un toboggan de longueur relativement importante selon l'invention présente de nombreux avantages. La graine n'est pas maintenue fortement dans le logement (au risque d'un éventuel blocage), mais peut rejoindre rapidement le toboggan, qui forme une zone « de détente », ou « de décompression », guidant progressivement la graine, pour mieux contrôler l'instant de sa libération.

Le rayon Ri du logement est choisi de façon que le logement puisse recevoir une unique graine, c'est-à-dire qu'il est légèrement supérieur au rayon d'une sphère de référence représentant le type de graine (maïs, blé, colza,...) pour lequel la roue est prévue. Ainsi, une unique graine peut être placée dans un logement. Il est en effet important qu'une seule graine soit présente dans chaque logement, pour assurer la distribution régulière souhaitée. Les dents ne sont pas prévus pour contenir plusieurs graines : le dispositif de régulation n'est pas destiné à des semis en poquets, mais graine par graine.

Le fait que le bec présente une surface supérieure définissant une portion d'ellipse permet notamment de saisir chaque graine dans la zone de réserve sans la détériorer.

Par ailleurs, la forme en demi-cercle du logement permet de maintenir l'unique graine prélevée dans la zone de réserve, au sein de la dent même en cas de secousses ou vibrations, sans toutefois risquer de la bloquer (ce qui pourrait arriver par exemple si la forme du logement différait de la forme de la graine, et créait des zones de frottement entre le logement et la graine). La forme du logement est ainsi adaptée à la forme des graines à semer. Ses dimensions varient en fonction du type de graines à semer (une roue donnée étant donc adaptée à un type de graine).

Selon un mode de réalisation particulier, ladite roue comprend au moins deux rangées de dents séparées par un espace central.

La présence d'au moins deux rangées de dents permet de réaliser un dispositif de régulation compact, car il permet de transporter au moins deux fois plus de graines qu'un dispositif comprenant une unique rangée. En outre, la présence d'au moins deux rangées de dents peut jouer un rôle d'agitateur de graines dans la zone de réserve : en effet, quand une rangée de dents prélève une graine dans la zone de réserve, les autres graines de la zone peuvent être naturellement poussées vers la ou les autres rangées de dents.

Dans ce cas, les dents d'une première rangée peuvent notamment être disposées en quinconce par rapport aux dents d'une deuxième rangée.

Plus généralement, quand la roue comprend plusieurs rangées de dents, ces dernières sont avantageusement décalées angulairement les unes par rapport aux autres, pour lâcher régulièrement et en alternance les graines de chacune des rangées.

Selon un autre aspect particulier, ladite au moins une rangée de dents peut être disposée à une distance d'une paroi dudit dispositif inférieure ou égale à 1 mm.

Ainsi, chaque rangée de dents est placée au plus près de la paroi du boîtier, afin de n'autoriser aucun passage de graines le long de cette paroi.

Selon un mode de réalisation particulier, chacune desdites dents présente au moins une paroi latérale, au moins sur une portion dudit logement.

Une telle paroi peut permettre de maintenir la graine à l'intérieur du logement, sans qu'elle ne puisse s'échapper latéralement, puis le cas échéant de la guider vers le toboggan.

Selon une autre caractéristique particulière, ladite roue peut être entraînée en rotation par un moteur situé au moins en partie à l'intérieur de ladite roue.

Ainsi, le dispositif de régulation forme un module consolidé apte à être fixé sur des éléments mobiles tels que des éléments semeurs du semoir. Un tel moteur peut notamment être électrique, et la vitesse du moteur peut être asservie à la dose qui arrive des moyens de distribution et de dosage, afin d'avoir un remplissage complet des dents. Cette vitesse peut être proportionnelle à la vitesse d'avancement du semoir.

Selon une mise en oeuvre particulière, ladite roue est sélectionnée parmi une pluralité de roues adaptées chacune à un type, une taille et/ou une dose de graines à transporter.

Ainsi, les roues utilisées peuvent être interchangées lorsque la variété et/ou la dose de graines à semer varie.

Selon un mode de réalisation particulier, le dispositif de régulation comprend des moyens mobiles de retenue des graines à l'intérieur desdits logements desdites dents, retardant la libération de chaque graine, pouvant prendre deux positions :
- une position de retenue d'une graine, par défaut, dans laquelle lesdits moyens de retenue sont plaqués contre la dent ; et
- une position de libération d'une graine, lesdits moyens de retenue étant temporairement déplacés pour être éloignés de ladite roue.

Ces moyens mobiles peuvent permettre de maintenir les graines dans le logement jusqu'à ce que l'extrémité libre de l'élément mobile soit déplacée par une des dents. A cet instant, la graine peut s'échapper du logement et tomber de manière sensiblement verticale dans un conduit de transfert vers le sol. Ils permettent donc de retarder, et de synchroniser, les libérations de graines.

Lesdits moyens mobiles de retenue peuvent par exemple comprendre au moins un balai comprenant un assemblage de poils dont au moins la partie libre s'étend sensiblement tangentiellement à la roue et sensiblement verticalement.

Ainsi, les poils du balai maintiennent la graine contre le dos de la dent, jusqu'à ce qu'ils passent dans la position de libération, dans laquelle ils sont éloignés de la roue.

Selon un mode de réalisation particulier, ladite entrée d'alimentation de ladite réserve comprend un plan incliné, dirigeant les graines vers une marche formée sensiblement à mi-hauteur dudit dispositif de régulation, de façon à ralentir les graines arrivant dans ladite zone de réserve.

Ceci permet de recevoir les graines dans la réserve sans les projeter contre la roue à godets ni créer d'effet de rebond. Elles sont ainsi amorties dans la zone de réserve.

L'invention concerne également un semoir mettant en oeuvre au moins un dispositif de régulation tel que décrit ci-dessus.

### 4. Liste des figures

D'autres buts, caractéristiques et avantages de l'invention apparaîtront plus clairement à la lecture de la description suivante, donnée à titre de simple exemple illustratif, et non limitatif, en relation avec les figures, parmi lesquelles :

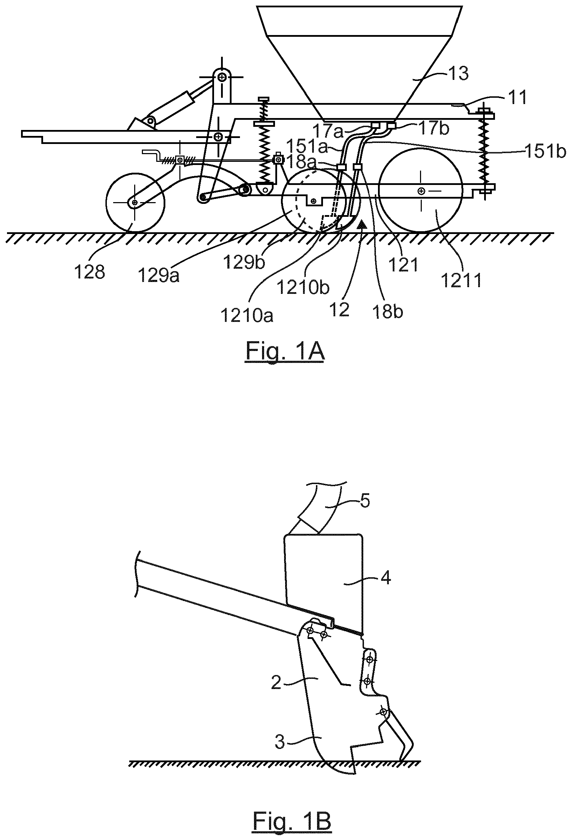

- les **figures 1A et 1B** illustrent deux exemples d'application d'un dispositif de régulation selon l'invention :
   - **figure 1A** **:** vue générale d'un élément semeur à disques d'un semoir en ligne, mettant en oeuvre un dispositif de régulation selon l'invention ;
   - **figure 1B** **:** exemple de mise en oeuvre sur un élément semeur à soc ;
- la **figure 2** est une vue schématique d'un premier mode de réalisation d'un dispositif de régulation de la distribution de graines selon l'invention, en cours de fonctionnement ;
- les **figures 3A à 3C** sont des vues de la roue comportant deux rangées de dents :

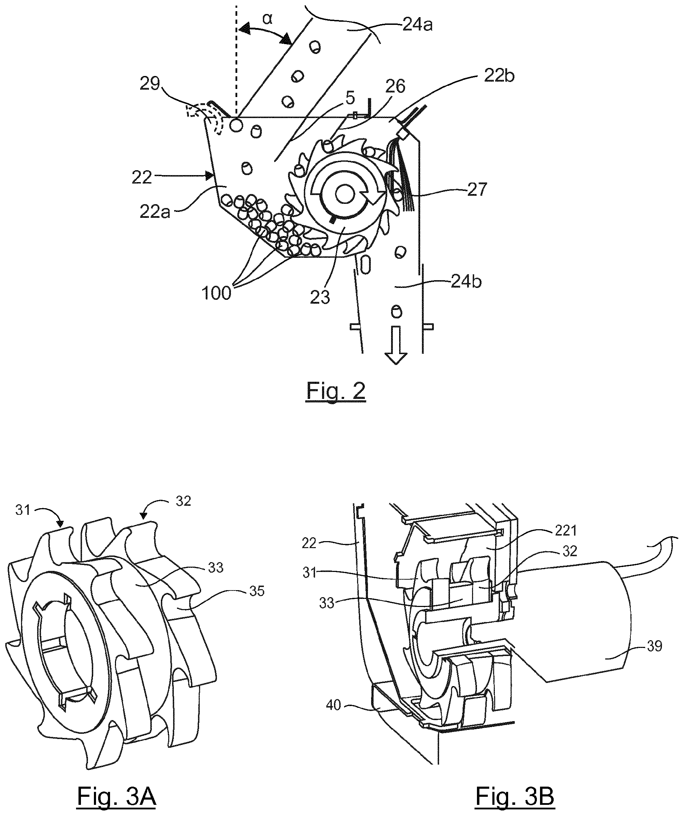

   - **figure 3A** : vue en trois dimensions de la roue ;
   - **figure 3B** : vue en trois dimensions de la roue de la figure 3A mise en place dans le dispositif de régulation ;

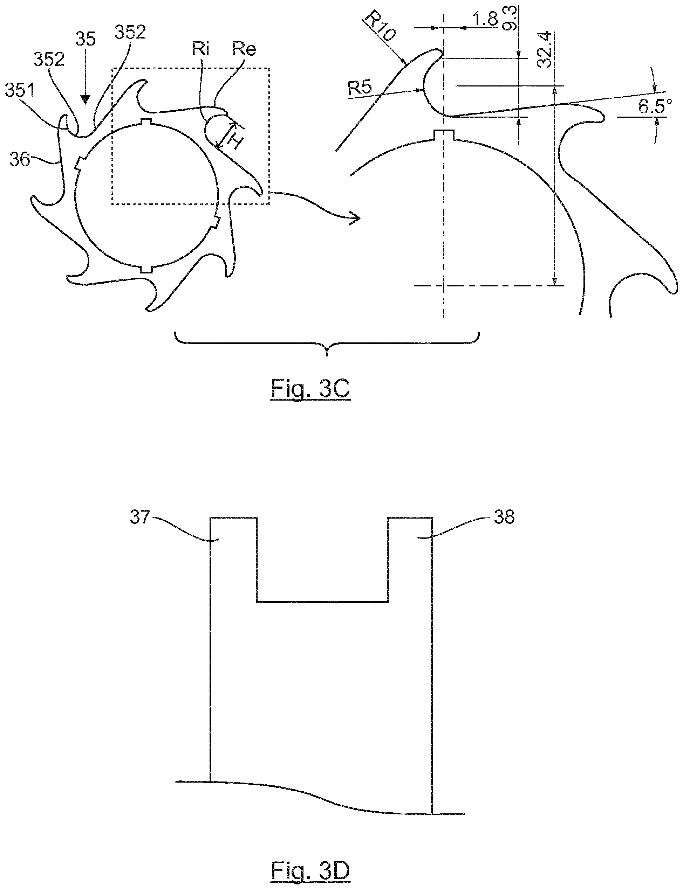

   - **figure 3C** : vue agrandie d'une dent formant godet ;
   - **figure 3D** : vue en coupe d'une dent munie de parois latérales ;

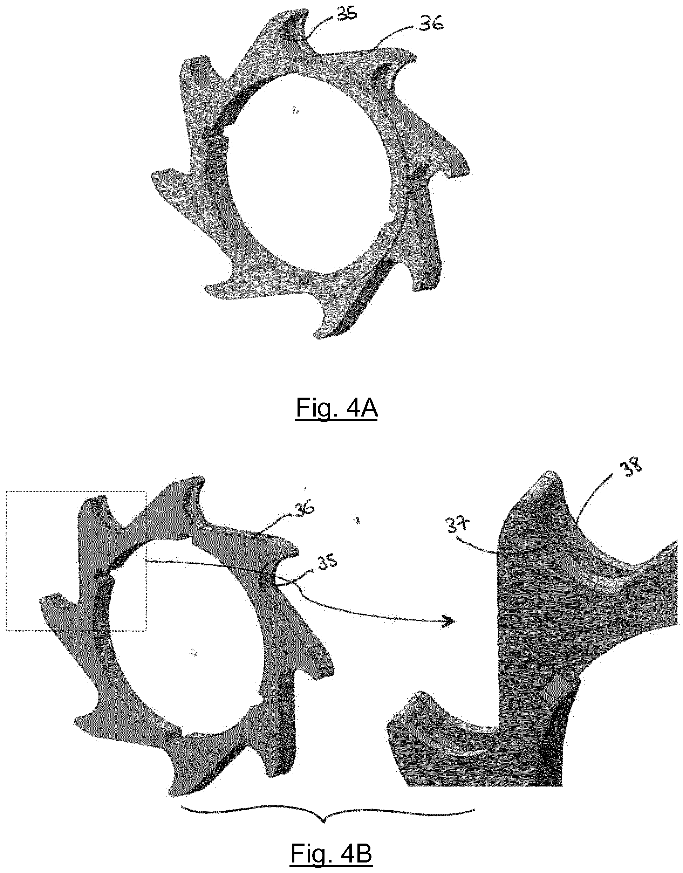

- les **figures 4A et 4B** illustrent deux modes de réalisation des dents de la roue, munies d'un ou plusieurs parois latérales, pour le semis de deux types de graines :
   - **figure 4A** : dents à une paroi latérale pour le semis de graines de maïs ;
   - **figure 4B** **:** dents à deux parois latérales pour le semis de graines de blé ;

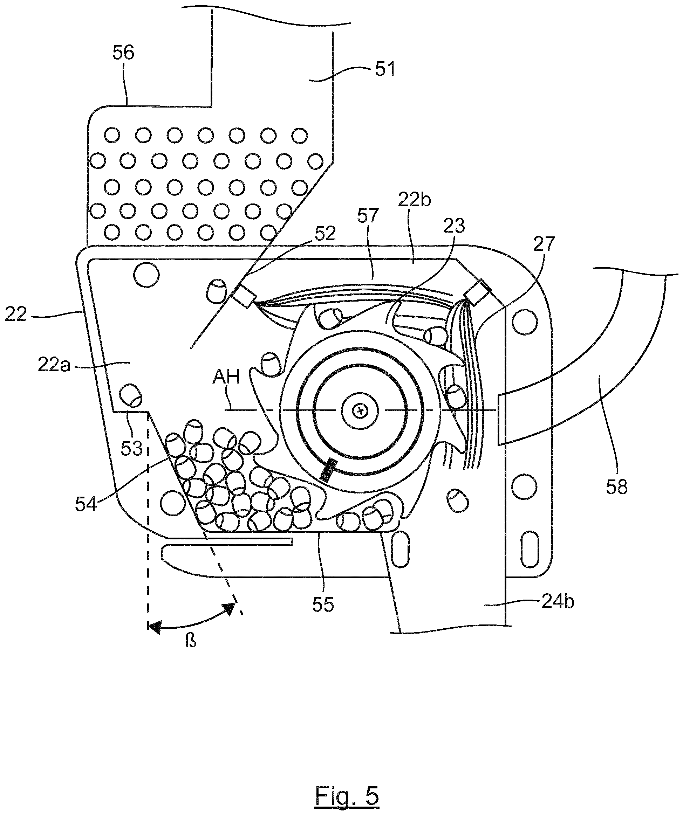

- la **figure 5** est une vue du dispositif selon un deuxième mode de réalisation mettant en outre en oeuvre un balai sensiblement horizontal ;

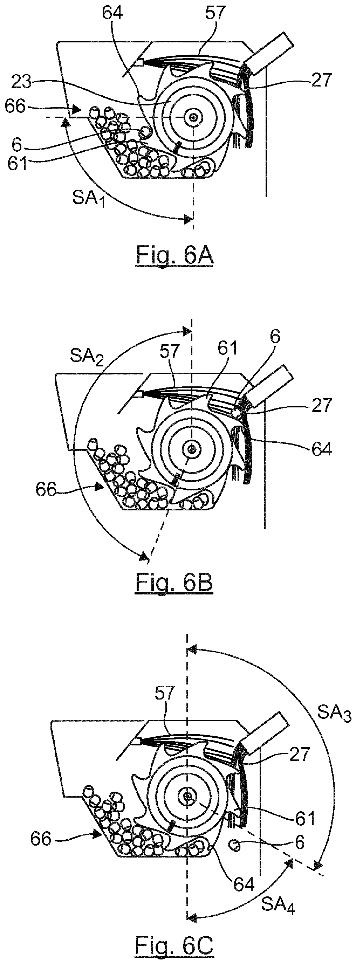

- les **figures 6A** à **6C** illustrent le trajet d'une graine lors de son transport par la roue dentée, sur des vues en coupe simplifiées de la figure 5 :
   - **figure 6A** : une des graines de la réserve est prise par une dent ;
   - **figure 6B** : la graine est maintenue dans la dent, en partie supérieure, par le balai horizontal ;
   - **figure 6C** : la graine est libérée, après avoir été retenue par le balai vertical.

### 5. Description détaillée de modes de réalisation de l'invention

### 5.0 Principe général d'un semoir

Un exemple de semoir à disques mettant en oeuvre l'invention est illustré sur la **figure 1A****.** Une structure de semoir de ce type est notamment décrite dans le document de brevet EP1212932 ou EP2060163.

Ce semoir est en appui sur le sol par l'intermédiaire des éléments semeurs 12. Sur la vue de côté de la **figure 1A****,** un seul élément semeur est illustré. En réalité, plusieurs éléments semeurs similaires sont mis en oeuvre parallèlement.

Le semoir est équipé d'une trémie 13, fixée sur un châssis 11 et destinée à contenir les graines de semences. Dans le mode de réalisation illustré, la distribution des graines est assurée de façon mécanique. Des dispositifs de dosage 17a, 17b prélèvent les graines au fond de la trémie 13, par exemple à l'aide d'une roue doseuse rotative.

La distribution peut également être pneumatique. Dans ce cas, un générateur d'air comprimé fournit un courant d'air comprimé vers une tête de répartition et de distribution, et les graines prélevées par le dispositif de dosage sont insérées dans le flux d'air.

En-dessous du niveau du châssis 11, et solidaire de celui-ci, est donc installée une série d'éléments semeurs 12, dont un seul est illustré sur la **figure 1A****.**

Dans ce mode de réalisation, cet élément semeur comprend un bras porteur 121, relié au châssis 11 et portant :
- une roue d'appui au sol 128 ;
- une paire de disques semeurs 129a, 129b munis chacun d'un coutre, ou rasette 1210a, 1210b, apte à être alimenté en semences via un conduit souple et flexible 151a, 151b et un dispositif 18a, 18b de régulation selon l'invention, décrit plus en détail par la suite ;
- une paire de rouleaux suiveurs 1211, adaptés pour rouler sur le sol et le compacter.

L'invention peut également être mise en oeuvre sur un semoir à socs, tel que décrit par exemple dans le document de brevet FR2658380. La **figure 1B** illustre un soc d'un tel semoir, classique en soi, comprenant un corps 2 à la base duquel est montée une pièce d'usure 3 profilée et arquée. La partie avant du soc est dirigée vers la gauche sur cette figure.

Selon l'invention, le soc est équipé d'un dispositif de régulation 4 (décrit plus en détail par la suite), recevant des graines depuis la trémie, de la même façon qu'expliqué précédemment, via le conduit 5. Le dispositif de régulation 4 délivre les graines de façon régulière dans le corps du soc 2, qui les dirige vers la pièce d'usure 3 qui forme un sillon.

### 5.1 Principe général de l'invention

L'invention propose une solution efficace et simple à mettre en oeuvre pour permettre une distribution plus homogène des semences, en particulier pour les semences nécessitant d'être déposées une par une dans un sillon au sol, de manière alignées et à intervalles réguliers, telles que les semences de blé, colza, maïs, betterave, pois, etc.

Le principe général de l'invention repose ainsi sur la mise en oeuvre d'un dispositif de régulation à entraînement mécanique (sans moyens pneumatiques, au niveau de ce dispositif de régulation, par opposition aux semoirs monograine), en supplément d'un dispositif de dosage et de transport (par la suite appelé dispositif de dosage) classiquement utilisé dans un semoir.

Ainsi, un semoir selon l'invention comprend à la fois un dispositif de dosage classique, placé en sortie de trémie, et un dispositif de régulation selon l'invention, placé en sortie du dispositif de dosage, à proximité du sol.

Ce dispositif de régulation est placé sur le parcours des graines entre le dispositif de dosage et les moyens de mise en terre des graines, ou moyens de semis.

Ainsi, le dispositif de régulation est placé « en coupure », ou « en série », par analogie au vocabulaire de l'électricité, sur le conduit de transfert (151a, 151b ou 5) qui relie habituellement directement le dispositif de dosage aux moyens de mise en terre. Ce conduit de transfert est donc décomposé en deux parties, une partie amont, reliant la sortie du dispositif de dosage à l'entrée du dispositif de régulation, et une partie aval reliant la sortie du dispositif de régulation aux moyens de mise en terre.

Il est à noter que cette « coupure » du conduit de transfert peut être effectuée non seulement sur un élément semeur neuf, mais également sur un élément semeur existant, pour améliorer la précision de celui-ci. Il suffit en effet de monter un dispositif de régulation selon l'invention sur le conduit de transfert existant.

Le dispositif de régulation reçoit donc les graines délivrées par le dispositif de dosage. Malgré les efforts mis en oeuvre pour l'efficacité de tels dispositifs, il arrive que les graines soient délivrées « par paquets », et qu'il y ait des moments sans graine délivrée. Le dispositif de régulation reçoit ces graines, en conserve une réserve « tampon », et les délivre aux moyens de mise en terre de façon la plus régulière possible, une à une et à intervalles réguliers, autant que faire se peut.

Le dispositif de régulation est rapproché du sol, par rapport à la position du dispositif de dosage qui se trouve au niveau de la base de la trémie (et de préférence placé au plus près possible du sol). Il peut notamment être fixé sur l'élément semeur, en entrée de la canule ou du soc qui dirige les graines vers le sol : le gain de régularité offert par le système est ainsi conservé lorsque les graines sont déposées sur le sol. Les graines sont ainsi semées à la suite les unes des autres, de manière régulière et unitaire ou pratiquement unitaire.

Le traitement des graines est donc gravitaire, pour la prise et pour le lâcher des graines. Il est purement mécanique, et ne nécessite pas la présence de moyens pneumatiques.

Le dispositif de régulation ne doit pas être confondu avec un dispositif de dosage, qu'il complète, mais ne remplace pas. Les deux dispositifs n'ont pas les mêmes fonctions. Le dispositif de dosage est placé directement sous la trémie, et reçoit donc les graines directement de celle-ci, ce qui suppose une pression forte, due à la masse de graines présentes dans la trémie. Le dispositif de régulation est en revanche un élément de taille réduite, présentant par exemple une face latérale de l'ordre de 10 cm x 10 cm, et une largeur de 3 à 5 cm. Il présente une réserve de graines tampon, qui contient uniquement quelques dizaines ou centaines de graines (selon la taille de celles-ci), qui ne sont donc pas soumises à une forte pression.

Ainsi, alors que la précision en sortie (c'est-à-dire le respect d'une distribution de graines une à une avec un intervalle de temps, ou d'espace, souhaité au niveau du sol) du dispositif de dosage est généralement de l'ordre de 40%, celle d'un dispositif de régulation selon l'invention peut atteindre de l'ordre de 75% à 80%, voire plus dans certaines conditions. En d'autres termes, le dispositif de l'invention permet d'obtenir une précision proche de celle d'un semoir monograine, sans la complexité de ce dernier, et tout en offrant une polyvalence sur les différents types de graines.

Un tel dispositif de régulation comprend une roue munie d'au moins une rangée de dents formant godets (aptes à porter chacune une seule graine à l'intérieur du logement formé par ce godet), entraînée en rotation. Cette roue, logée dans un boîtier, puise les semences dans une réserve de graines approvisionnée par le dispositif de dosage, via une partie amont d'un conduit de transfert, et les transporte, dans ses godets, jusqu'à une partie aval d'un conduit de transfert (par exemple la canule susmentionnée).

Selon l'invention, le profil spécifique des dents de la roue est adapté pour assurer la prise d'une graine, son maintien puis sa délivrance au moment souhaité. Notamment, comme détaillé par la suite, chaque dent présente une surface plane importante, formant toboggan, le long de laquelle la graine se déplace progressivement pour contrôler, notamment retarder, la libération de la dent.

Cette forme, le cas échéant combinée avec des moyens de retenue, par exemple un balai, permet que la graine ne soit ainsi libérée (au plus tôt) qu'après qu'elle a dépassé une droite horizontale passant par l'axe de la roue. De cette façon, la graine n'est soumise, dans sa chute, qu'à l'effet de la gravité, et chute sensiblement verticalement autant que faire se peut. Elle n'est pas soumise à des déviations ni à la force centrifuge, en sortant tôt de la dent, ce qui risquerait d'entraîner des rebonds sur les bords de la canule, et donc des décalages de position et/ou des retards.

### 5.2 Eléments constituant le dispositif de régulation

Les différents éléments du dispositif de régulation 1 selon un premier mode de réalisation sont illustrés sur la **figure 2****,** qui représente le système en cours de distribution de graines. Ce dispositif de régulation, de faible encombrement, peut facilement équiper un élément semeur traditionnel muni d'un dispositif de dosage classique, de manière à améliorer la précision et le rendement de l'opération de semis.

Le dispositif de régulation est formé d'un boîtier 22 comprenant deux compartiments 22a, 22b communicants. Le premier compartiment 22a forme une réserve de graines, dite « réserve tampon », où s'amassent des graines 100 en provenance du doseur (non représenté), tandis que le deuxième compartiment 22b abrite une roue 23 à godets, venant puiser les graines 100 une à une dans la réserve tampon.

Les graines 100 arrivent, dans ce premier mode de réalisation, depuis le doseur jusqu'au premier compartiment 22a du boîtier 22 via une partie aval du conduit de transfert 24a, solidarisée sur le haut du boîtier 22, et reliée à une partie amont du conduit de transfert 24b (ou reliée directement à une partie supérieure de la canule ou du soc).

La partie aval 24a est ici orientée (au voisinage du boîtier) selon une direction opposée au sens de rotation de la roue 23, par exemple selon un angle α compris entre 15° et 35° par rapport à la verticale. Ceci permet de ralentir et guider les graines, en coopération avec une paroi 25, prolongeant la partie aval tout d'abord avec l'angle a, puis verticalement. Cette paroi 25 isole la zone d'arrivée des graines de la roue 23, le compartiment 22a comprenant donc une zone d'arrivée des graines et une zone de préhension des graines.

Les graines sont ainsi dirigées vers la zone de préhension sans interférer avec le remplissage des godets de la roue 23. Il est en effet souhaitable d'éviter, ou à tout le moins de limiter, les rebonds de graines arrivant dans la réserve tampon, et en particulier que des graines viennent se loger en doublon dans une dent, ou viennent percuter et éjecter une graine présente dans une dent.

Une ouverture 29 peut être prévue, en partie supérieure du boîtier, pour permettre l'évacuation de l'air, notamment en cas d'alimentation pneumatique. Des moyens complémentaires (non représentés) formant « chaussette » peuvent permettre de diriger l'air, éventuellement chargé de poussière, vers le sol.

Selon un autre mode de réalisation, illustré par **la** **figure 5****,** la partie amont 51 du conduit amenant les graines délivrées par le dispositif doseur est sensiblement verticale. Les graines arrivent sur un plan incliné 52, formant par exemple un angle de l'ordre de 35 à 50° avec l'axe vertical défini par la partie amont 51 du conduit. Ce plan incliné 52 dirige les graines vers une marche 53, sensiblement horizontale, qui se prolonge vers le bas par un second plan incliné 54, formant également un angle β de l'ordre de 35° à 50° avec la verticale (les deux plans inclinés 52 et 54 formant entre eux un angle compris entre 80 et 100°).

La marche 53 et le second plan incliné 54 peuvent être formés dans une même pièce, et se prolonger par une partie de fond 55, s'étendant le cas échéant sous la roue 23, et définissant sensiblement la réserve tampon, dont le niveau de remplissage optimal correspond sensiblement à la position de la marche 53.

Le plan incliné 52, puis la marche 53, absorbent une partie importante de l'énergie accumulée par la graine lors de sa chute. Il y a ainsi peu d'effets de rebonds, et la saisie des graines par la roue 23 n'est pas, ou peu, perturbée.

Cette marche (et éventuellement d'autres éléments) peut être réalisée en, ou peut porter, un matériau amortisseur.

On peut noter qu'une portion 56 d'extrémité de la partie amont 51 du conduit présente une grille munie d'ouvertures permettant d'expulser l'air, notamment si le transfert des graines est assuré de façon pneumatique.

Ainsi, l'air sous pression est éjecté avant le dispositif de régulation, et ne perturbe pas le fonctionnement de ce dernier, ni la circulation des graines dans la partie aval du conduit. Ceci est en particulier important pour les graines de petite taille, notamment pour les graines de colza.

Le plan incliné 52 peut s'étendre dans le prolongement de cette portion 56.

Une arrivée 58 d'un produit complémentaire, ne nécessitant pas de régulation précise, par exemple pour un produit anti-limaces, peut être prévu (dans les différents modes de réalisation). Il est par exemple monté sur le boîtier de façon que ce produit soit délivré au-dessus de la partie amont du conduit de transfert 24b. Pour éviter que ce produit complémentaire n'interfère avec les graines lâchées, l'arrivée 58 peut être montée en face du moyeu de la roue 23, dans le cas où celle-ci porte deux rangées de dents.

Une trappe de vidange 40 **(****figure 3B****)** peut également être prévue pour vider le dispositif, et par exemple pour débarrasser le boîtier 22 des semences endommagées, ou n'ayant pas été recueillies par la roue 23.

Selon une variante de mise en oeuvre, cette trappe 40 (ou le cas échéant une autre trappe) peut déboucher directement ou indirectement dans la canule. Ceci permet de court-circuiter le dispositif de régulation, les graines traversant la zone de réserve et débouchant directement dans la canule (dont la partie supérieure est adaptée pour s'étendre sous la trappe), sans transiter par la roue, sans qu'il soit nécessaire de démonter ce dispositif de régulation. Ceci peut notamment être adapté à certains types de graines ne nécessitant pas, ou étant non adaptées, à une distribution via la roue du dispositif de régulation (« ray grass » par exemple) et/ou pour des forts débits ne nécessitant pas de régulation.

Par exemple, la trappe peut coopérer avec un clapet mobile, s'étendant sensiblement verticalement lorsque la trappe est fermée, pour former une portion supérieure de la paroi classique de la canule, et se déplaçant et s'inclinant lorsque la trappe est ouverte, pour former, avec les joues prolongées de la canule, un entonnoir recevant les graines directement depuis la zone de réserve.

Ainsi, selon cette approche, il est possible de ne réguler qu'en cas de besoin.

Un exemple de roue 23, adaptée notamment aux graines de maïs, est représentée, seule, en trois dimensions sur la **figure 3A****.** Elle est également représentée mise en place dans le deuxième compartiment 22b du boîtier 22 sur la **figure 3B****.**

Cette roue 23 comprend au moins une rangée de dents formant godets. Selon un mode de réalisation particulier de l'invention, la roue 23 comprend deux rangées de dents 31, 32 formant godets positionnées de part et d'autre d'une partie centrale, ou moyeu, 33. Ce moyeu 33 présente une largeur par exemple supérieure ou égale à 1,5 fois la taille d'une graine, pour qu'une telle graine pénétrant dans l'espace défini par ce moyeu ne puisse pas s'y coincer et être entraînée et distribuée de façon surnuméraire. Cette largeur importante permet que la graine se retrouve redirigée vers la réserve, et non entrainée.

La présence de deux rangées 31, 32 de dents permet de réaliser un dispositif de régulation compact, sans que la vitesse de rotation soit trop élevée, car il peut ainsi transporter deux fois plus de graines qu'un dispositif comprenant une unique rangée. En outre, la présence de deux rangées de dents formant godets joue le rôle d'agitateur de graines dans la zone de réserve : en effet, quand une rangée de dents prélève une graine dans la zone de réserve, les autres graines de la zone sont naturellement poussées vers l'autre rangée de dents.

Chaque rangée de dents formant godet 31, 32 est décalée angulairement, autrement dit positionnée en quinconce, pour ne pas nuire à la régularité de distribution des graines. Par exemple, le décalage angulaire peut être égal à 360/nombre total de godets.

Les dents de la roue 23 présentent chacune une cavité, ou logement, 35 formant godet, ou réceptacle. C'est-à-dire qu'elles présentent de préférence une forme spécifique sensiblement en demi-cylindre, dont un exemple pour le maïs est illustré sur la **figure 3C****,** leur permettant ainsi de recueillir une graine dans la réserve de graines, par exemple à la manière d'une cuillère.

Les godets présentent ainsi une forme incurvée, sensiblement en demi-cylindre dont le rayon est compris entre 1 et 10 mm - défini en fonction du type de graines semés, assurant que la graine reste « emprisonnée » dans le godet même en cas de secousses ou vibrations (contrairement aux systèmes de type diabolo ou centrifuge existants, desquels les graines peuvent être éjectées en présence de secousses et/ou de vibrations), sans rester bloquée au moment de la libération.

Les dimensions d'une dent, pour une roue présentée à titre d'exemple, sont rapportées sur la **figure 3C****.** Ces dimensions sont bien sûr données à titre d'exemple, et peuvent varier, notamment en fonction du type de graine. Le nombre de dents est bien sur fonction du diamètre de la roue.

Selon ce mode de réalisation particulier, le rayon externe Re du godet est égal à sa hauteur **H**, tandis que son rayon interne **Ri** est équivalent à 0,6 fois sa hauteur **H**. Comme ceci apparaît sur la portion agrandie de la **figure 3C****,** le rayon interne vaut 5 mm, le rayon externe 10 mm, et la hauteur du godet vaut 9,3 mm.

Le dos 36 de la dent peut être sensiblement plan, formant un toboggan, s'étendant par exemple sur une longueur L de 15 à 25 mm, sur lequel la graine va se déplacer progressivement lorsqu'elle sort du réceptacle 35. Il est important que ce toboggan présente une longueur L relativement importante, valant au moins trois fois le rayon Ri du logement 35. Dans l'exemple illustré, ce ratio L/Ri est de l'ordre de 4, L valant 20 mm.

La pointe de la dent présente une forme de bec, recourbé vers le centre de la roue. Le toboggan se prolonge par une surface définissant une portion d'ellipse recourbée vers la roue 23, correspondant à la surface supérieure du bec. La surface inférieure de ce bec est formée par la partie supérieure du logement.

Cette pointe, ou bec, est adaptée notamment pour faciliter la saisie d'une graine et/ou pour retenir la graine dans le logement 35, pendant la montée de la dent depuis la zone de réserve. La pente peut être considérée comme la partie supérieure (ou externe) de la pointe.

Le logement 35 de réception d'une graine est défini, dans sa partie intérieure apte à recevoir une graine, par l'arc de cercle de rayon Ri, et plus précisément sensiblement par un demi-cercle de rayon Ri.

Schématiquement, il est formé par une première paroi 351 (dite paroi distale) définie par la partie inférieure (ou interne) de la pointe, un fond 352 dont la tangente est sensiblement radiale, et une deuxième paroi 353 (dite paroi proximale) rejoignant le toboggan formé par le dos de la dent précédente.

Cette forme particulière de logement permet de retenir la graine prélevée au sein de la dent, pendant sa montée, même en cas de secousses ou de vibrations. Elle épouse sensiblement la forme de la graine, ce qui permet - en plus du maintien de la graine - de ne pas coincer la graine dans le logement.

Vue en largeur (comme illustré sur la coupe de la **figure 3D**), chaque dent peut présenter, sur tout ou partie de sa longueur au moins une paroi latérale 37, 38, présentant par exemple une hauteur comprise entre 1 et 3 mm, participant au maintien de la graine.

Dans le cas d'une grosse graine, par exemple de maïs, une seule paroi latérale peut être prévue, du côté du moyeu de la roue. Cette configuration est illustrée sur la **figure 4A****.**

Pour des graines plus petites, par exemple du blé, des parois peuvent être mises en oeuvre de chaque côté de la dent. Cette configuration est illustrée sur la **figure 4B****.** Les dimensions, hauteur et épaisseur des parois, peuvent être adaptées aux différents types de graines.

Par ailleurs, la roue 23 est de préférence faite d'un matériau souple peu agressif pour des graines fragiles (par exemple les graines de colza), par exemple en polyuréthane.

Des roues de formes et/ou de tailles différentes, au nombre de godets variable, ou faites d'autres matériaux, peuvent être utilisées selon le type et les dimensions des graines à distribuer. Le boîtier 22 peut à cet effet comporter un flasque apte s'ouvrir sans outil de façon à remplacer facilement les roues.

Comme représenté sur la **figure 3B****,** la roue est positionnée dans le deuxième compartiment 22b du boîtier 22 de manière que chaque rangée de dents formant godets 31, 32 soit placée au plus près des parois 221 du boîtier (par exemple avec un espace de l'ordre de 1 mm), afin d'éviter que des graines passent et/ou se coincent le long de ces parois. De la même manière, l'espace sous la roue est réduit (par exemple, pas plus de 2 mm) de manière à empêcher le passage des graines vers le conduit de transfert 24b, ainsi que les coincements de débris, bouts de paille, etc. Afin de réduire encore davantage les risques, un balai (non visible sur les figures) peut également être prévu en bas du boîtier.

Un moteur 39, par exemple de type électrique, entraîne la roue 23 en rotation. Il peut être logé intégralement ou partiellement à l'intérieur de la roue 23 formant avec le boîtier 22 un module compact pouvant être facilement monté sur des éléments semeurs.

Selon un mode de réalisation particulier de l'invention, il tourne à des vitesses relativement faibles, comprises par exemple entre 10 et 100 tours par minute. Cette vitesse peut être asservie à la dose de graines distribuées par le doseur afin que les godets soient toujours remplis. Par exemple, le niveau de semences dans la réserve tampon pourra être égal à environ 4 à 8 fois le nombre de godets.

Dans un autre mode de réalisation, plusieurs (voire tous les) dispositifs de régulation peuvent être entraînés par un seul moteur. Dans ce cas, les axes des roues des différents dispositifs sont avantageusement alignés.

Pour le maïs, la réserve contient par exemple, en moyenne, une centaine de graines. Toutefois, le dispositif de régulation, même s'il est conçu pour distribuer les graines une à une régulièrement, peut accepter des situations de doublons (graines groupées par deux ou plus) ou de manques (graine absente) le cas échéant. Il est ainsi très tolérant aux variations de charge, et ne se bloque ni en cas de surcharge ni en cas de sous-charge de la réserve. Des essais montrent qu'un tel dispositif de régulation peut accepter des surdoses fortes, de 1,5 voire 2 fois la dose prévue. Dans une telle situation, un nombre élevé de doublons sera délivré, mais le dispositif ne se bloquera pas.

Par ailleurs, l'entraînement de la roue 23 peut être lié à l'avancement du semoir, de manière proportionnelle. Ceci offre la possibilité à l'agriculteur de moduler ou couper automatiquement et instantanément la distribution si besoin (cela peut être le cas dans les extrémités de parcelles, ou dans les virages, etc.). Les graines résiduelles transportées dans le canal de transfert se trouvent alors bloquées dans la réserve tampon et ne sont sélectionnées que lorsque le semoir (et donc la roue) se met à nouveau en marche.

Ceci est un avantage par rapport aux systèmes actuels, notamment les semoirs à transport pneumatique, qui disposent toujours d'une quantité de graines en transit dans les conduits, continuant à s'écouler jusqu'à vidange complète, et ce malgré l'arrêt du semoir. Dans ce cas, les graines tombent au sol où elles s'amassent.

Il peut arriver que des graines 100 soient entraînées par la roue 23 sans toutefois être placées dans une des dents formant godet. Par exemple, dans le mode de réalisation de la **figure 2****,** une graine peut se loger et être entraînée entre les deux rangées de dents 31, 32 au niveau du moyeu 33). Afin de remédier à cette éventualité, on peut prévoir un éjecteur central 26, dit « décrottoir », prenant par exemple la forme d'une lame plane, s'étendant au dessus du moyeu 33. En contact avec ou à proximité de ce moyeu, entre les deux rangées de dents 31, 32, il permet de renvoyer vers la réserve tampon les graines ne devant pas être distribuées.

Dans ce premier mode de réalisation, un balai souple 27 est placé en haut du boîtier 22, par exemple dans une zone où la roue 23 a approximativement effectué entre 1/4 et 2/3 de sa rotation après saisie d'une graine. Ce balai 27 est prévu pour maintenir et/ou guider la graine le long du toboggan 36 de la dent de la roue 23 jusqu'à ce qu'elle s'en échappe par gravité.

C'est-à-dire que la combinaison de ce toboggan 36 et d'un balai 27 (plus généralement d'un moyen de retenue mobile) permet d'optimiser le contrôle de la chute de la graine, qui est retardée au moins jusqu'à un point de rotation de la roue où la pesanteur permet à la graine de s'échapper à la verticale dans le conduit de transfert 24b (la graine ayant donc franchi l'axe horizontal passant par l'axe de rotation de la roue).

Pendant toute la phase de maintien de la graine, le balai 27 est en contact avec la roue 23, dans une position dite de « retenue » qui est sa position par défaut.

Un mécanisme adapté peut assurer l'éloignement temporaire du balai 27 dans une position dite « de libération », pour qu'il s'écarte suffisamment de la roue pour libérer la graine au moment de libération souhaité, pour synchroniser de façon optimisée les lâchers de graines. Selon une approche efficace, cet éloignement temporaire est assurée par une dent (celle qui contenait la graine ou une dent suivante, selon le sens de rotation), dont la partie supérieure (partie la plus éloignée de l'axe de rotation de la roue) vient pousser et déplacer les poils du balai. Ce sont ainsi les dents qui contrôlent le débattement des poils du balai.

Dans un deuxième mode de réalisation, représenté sur la **figure 5****,** le dispositif comprend un second balai 57 sensiblement horizontal, souple, et en contact avec le moyeu 33 et les séries de dents 31, 32 de la roue. Ce balai 57 présente l'avantage de limiter les risques de basculement des graines, tout en évitant le blocage du système, dus à de potentiels débris de graines se coinçant sous un élément plus rigide. Dans ce mode de réalisation, le décrottoir du premier mode de réalisation est supprimé.

Ces balais 27, 57 sont relativement souples, mais possèdent toutefois une raideur suffisante leur permettant de conserver la partie de leurs poils en contact avec la roue sensiblement à la verticale, ou plus précisément sensiblement radialement à la roue, pour maintenir une graine 100 en place dans la dent malgré la rotation de la roue 23, au moins jusqu'à ce que cette graine dépasse un axe horizontal AH passant par l'axe de rotation de la roue. Ainsi, la graine est libérée seulement après avoir dépassé cet axe horizontal AH, et chute verticalement, en étant soumise à l'effet de la gravité.

La souplesse des balais 27, 57 peut leur permettre de s'adapter à tous les types de roues et/ou de graines.

Ces balais 27, 57 pourraient le cas échéant être remplacés par une ou plusieurs lames souples, par exemple en matière plastique ou en caoutchouc.

Ce dispositif de régulation peut être disposé à proximité du sol, par exemple sur l'élément de semis lui-même. Ainsi, le conduit de transfert 24b des graines jusqu'au sol, présente une longueur modérée (par exemple 30 à 40 cm) permettant d'accompagner les graines sans perturber l'espacement régulier entre celles-ci. Il peut présenter une surface lisse sans aspérité ne venant pas perturber la descente gravitaire des graines.

Un dispositif de régulation selon l'invention peut être prévu pour contrôler la dose exacte de graines semées pour chaque rang. Dans certains cas, des dispositifs de régulation seront utilisés sur certains rangs seulement (par exemple 1 sur 5), ou une paire de rangs, les autres rangs étant fermés (sans semence). En effet, les semoirs classiques délivrent une rangée de graines tous les 12,5 cm, alors qu'un semoir monograine délivrent une rangée de graines tous les 75 cm. L'invention permettant de s'approcher efficacement de la précision d'un semoir monograine, il peut être souhaitable d'utiliser le même écartement entre les graines.

Les graines 100 sont enfin déposées à intervalles réguliers sur le sol, la longueur modérée (de l'ordre de 30 cm par exemple) du canal de transfert 24b ne perturbant pas leur transport.

Bien sûr, les caractéristiques spécifiques ou variantes décrites en correspondance avec l'un des modes de réalisation peuvent être adaptées et/ou mises en oeuvre dans un autre mode de réalisation.

### 5.3 Fonctionnement

On décrit ci-après le fonctionnement du dispositif de régulation selon l'invention, à l'aide des **figures 6A à 6C****.**

Ces figures illustrent le trajet d'une graine 6, de la préhension par la roue dans un ensemble 66 de graines présentes dans la zone tampon jusqu'à la partie supérieure du boîtier, puis jusqu'à son lâcher. Sur ces figures, pour les besoins de l'explication, une seule graine 6 est présentée, dans différentes positions successives. Bien sûr, en pratique, chaque dent porte une graine.

Les graines 100 présentes dans la trémie sont donc dosées et distribuées par un dispositif de dosage (non représenté). Elles arrivent de manière plus ou moins irrégulière au niveau de la zone 22a du boîtier 22 du dispositif de régulation par la partie aval du conduit 24a. Les semences 100 sont recueillies, en continu, au niveau de la réserve tampon où elles s'accumulent (66).

Une dent 61 de la roue, lorsqu'elle est dans la partie inférieure du boîtier 22, traverse l'ensemble de graines 66 et sélectionne (ou attrape) une graine 6, comme illustré sur la **figure 6A****.** Au cours de la rotation de la roue, la dent 61 traverse un premier secteur angulaire SA1, compris sensiblement entre 0° et 90° (0° correspond à un rayon de la roue s'étendant verticalement vers le bas), dans lequel la pointe de la dent 61 guide une graine 6 présente dans la réserve tampon vers le logement de réception de la graine. La forme de la pointe est adaptée pour saisir, autant que faire se peut, une unique graine, sans la détériorer (extrémité arrondie).

Dans un deuxième temps, la dent couvre un deuxième secteur angulaire SA2, compris sensiblement entre 90° et 180°, dans lequel la graine est reçue et maintenue dans le logement 35 (les secteurs SA1 et SA2 se chevauchent, certaines graines pouvant être saisies tôt (et donc maintenues dans le logement tôt), et d'autres graines plus tard, sans que le fonctionnement ne soit altéré). Ce logement définit une cavité ou un godet, sensiblement en demi-cylindre, maintenant efficacement la graine, pour éviter qu'elle ne s'échappe, lors de la montée de la dent (malgré, par exemple, les vibrations et secousses).

Ainsi, après environ 1/4 à 2/3 de rotation de la roue 23, la graine 6, prélevée dans la réserve, arrive en contact avec les poils du balai « horizontal » 57 (dans le deuxième mode de réalisation), comme visible sur la **figure 6B****.** Pendant 1/6 à 1/4 de tour supplémentaire, elle est maintenue dans un « tunnel » (ou une cavité) formé par le rayon interne de la dent dans laquelle elle est placée, et le toboggan 36 formé par le dos de la dent 64 précédant la dent 61, et les poils du balai 57.

Puis la dent couvre un troisième secteur angulaire SA3 **(****figure 6C****),** sensiblement compris entre 180° et 310°, dans lequel la graine, soumise à la gravité, glisse progressivement le long du toboggan formé par le dos de la dent 64 précédente. La graine est en particulier guidée par les poils du balai 57, s'étendant au-dessus de celle-ci et latéralement.

La graine 6 continue de glisser sur le toboggan 36, venant en contact avec le deuxième balai, dit balai « vertical » 27, sans forcer, toujours sous l'effet de la gravité. La graine sort donc du logement puis se déplace petit à petit sur le toboggan, en étant retenue (et donc sa chute retardée) par le profil spécifique de la dent, en coopération avec l'action du deuxième balai 27 formant un tunnel (ou une cavité) pour la graine. Ce toboggan forme ainsi une « zone de détente », qui permet une sortie le plus tôt possible du logement de la dent, dont la forme est adaptée en conséquence. On évite ainsi des blocages de graines dans ce logement, en particulier lorsque plusieurs graines ont été saisies en même temps.

La graine reste ainsi maintenue sur le dos de la dent 64 précédente, jusqu'au moment souhaité pour la libération, c'est-à-dire un point de la rotation de la roue où le balai est repoussé par la dent qui avait pris la graine dans la réserve, la force de gravité permettant à la graine de s'échapper à la verticale dans le conduit de transfert aval 24b, dans le quatrième secteur angulaire SA4, sensiblement entre 310 et 360°.

Le décalage des poils peut être assuré, au moins en partie, par l'action de la dent suivante 61, dont la pointe vient en appui sur les poils, et les repousse, facilitant la chute de la graine 6. Ce mécanisme contrôle la synchronisation de la libération des graines, chaque libération étant actionnée par une dent (par la dent suivante, et plus précisément par la pointe formant la partie supérieure du logement de la graine considérée, dans le mode de réalisation illustré). Dans le cas où plusieurs rangées de dents sont prévues, les poils sont suffisamment souples et indépendants pour assurer un traitement différencié de chaque rangée (une partie des poils étant associée à une rangée donnée).

Dans ce mode de réalisation, ce sont donc les dents qui contrôlent le passage progressif de la position de retenue à la position de libération, et le retour à la position de retenue. Dans des variantes, d'autres moyens d'actionnement du déplacement sont envisageables - de préférence contrôlés par la rotation de la roue - pour assurer la synchronisation.

Il est à noter que, dans d'autres modes de réalisation, un dispositif de régulation selon l'invention peut s'affranchir de la présence de moyens de retenue. Dans ce cas, c'est la forme spécifique des dents, et en particulier le dos de dent de grande longueur, essentiellement plan, assurant une fonction de toboggan, qui assure le contrôle de la libération de chaque graine, cette libération étant retardée par le déplacement de la graine le long de ce toboggan.

## Revendications

1. Dispositif de régulation (18a, 18b, 22) pour semoir, destiné à alimenter en graines un élément semeur (12) d'un semoir et destiné à être monté en aval de moyens de dosage et de transport des graines,
ledit dispositif de régulation (18a, 18b, 22) comprenant une zone de réserve (22a), alimentée en graines (100) via une entrée d'alimentation connectée auxdits moyens de dosage et de transport,
le dispositif comprenant une roue (23) apte à prélever des graines (100) dans ladite zone de réserve (22a), au moyen d'au moins une rangée de dents, chaque dent étant configurée pour assurer un prélèvement d'une unique graine dans ladite zone de réserve, et présentant :
- une surface sensiblement plane (36), s'étendant sur une longueur L et formant toboggan ;
- un logement (35) définissant sensiblement un demi-cercle de rayon Ri et tangent au toboggan de la dent précédente ;
- une pointe formant un bec, la partie supérieure dudit bec définissant sensiblement une portion d'ellipse recourbée vers ladite roue (23), dans le prolongement dudit toboggan (36), et la partie inférieure dudit bec correspondant à une portion supérieure dudit logement,
le rayon Ri étant compris entre 1 et 10 mm et en ce que ladite longueur L vaut au moins le triple dudit rayon Ri,
**caractérisé en ce que** ledit toboggan est formé de façon que ladite unique graine glisse progressivement le long du toboggan jusqu'à sa libération,
**et en ce que** le logement (35) est configuré pour maintenir ladite unique graine puis la guider vers ledit toboggan.

2. Dispositif de régulation (18a, 18b, 22) pour semoir selon la revendication 1, **caractérisé en ce que** ladite roue (23) comprend au moins deux rangées de dents (31, 32) séparées par un espace central (33).

3. Dispositif de régulation (18a, 18b, 22) pour semoir selon la revendication 2, **caractérisé en ce que** les dents d'une première rangée (31) sont disposées en quinconce par rapport aux dents d'une deuxième rangée (32).

4. Dispositif de régulation (18a, 18b, 22) pour semoir selon l'une quelconque des revendications 1 à 3, **caractérisé en ce que** chacune desdites dents présente au moins une paroi latérale (37, 38), au moins sur une portion dudit logement (35).

5. Dispositif de régulation (18a, 18b, 22) pour semoir selon l'une quelconque des revendications 1 à 4, **caractérisé en ce que** ladite roue (23) est entraînée en rotation par un moteur (39) situé au moins en partie à l'intérieur de ladite roue (23).

6. Dispositif de régulation (18a, 18b, 22) pour semoir selon l'une quelconque des revendications 1 à 5, **caractérisé en ce que** ladite roue (23) est sélectionnée parmi une pluralité de roues adaptées chacune à un type, une taille et/ou une dose de graines à transporter.

7. Dispositif de régulation (18a, 18b, 22) pour semoir selon l'une quelconque des revendications 1 à 6, **caractérisé en ce qu'**il comprend des moyens mobiles de retenue des graines à l'intérieur desdits logements (35) desdites dents, retardant la libération de chaque graine, pouvant prendre deux positions :
- une position de retenue d'une graine, par défaut ; et
- une position de libération d'une graine, lesdits moyens de retenue étant temporairement déplacés pour être éloignés de ladite roue (23).

8. Dispositif de régulation (18a, 18b, 22) pour semoir selon la revendication 7, **caractérisé en ce que** lesdits moyens mobiles de retenue comprennent au moins un balai (27) comprenant un assemblage de poils dont au moins la partie libre s'étend sensiblement tangentiellement à la roue.

9. Dispositif de régulation (18a, 18b, 22) pour semoir selon l'une quelconque des revendications 1 à 8, **caractérisé en ce que** ladite entrée d'alimentation de ladite réserve comprend un plan incliné (52), dirigeant les graines vers une marche (53) formée sensiblement à mi-hauteur dudit dispositif de régulation (18a, 18b, 22), de façon à ralentir les graines arrivant dans ladite zone de réserve (22a).

10. Semoir comprenant une pluralité d'éléments semeurs (12),
chaque élément semeur (12) comprenant des moyens de dosage et de transport, contrôlant le débit des graines à la sortie d'une trémie (13) et délivrant lesdites graines dans un conduit de transfert (5) pour alimenter des moyens de mise en terre desdites graines,
chaque élément semeur (12) comprenant également un dispositif de régulation (18a, 18b, 22) monté entre lesdits moyens de dosage et de transport et lesdits moyens de mise en terre, à proximité de ces derniers,
ledit dispositif de régulation (18a, 18b, 22) comprenant une zone de réserve (22a), alimentée en graines (100) via une entrée d'alimentation connectée auxdits moyens de dosage et de transport par une partie amont (24a) dudit conduit de transfert,
ledit dispositif de régulation comprenant une entrée reliée auxdits moyens de dosage et une sortie reliée audit élément semeur,
ledit dispositif de régulation comprenant une roue (23) apte à prélever des graines dans ladite zone de réserve (22a), au moyen d'au moins une rangée de dents, chaque dent étant configurée pour assurer un prélèvement d'une unique graine dans ladite zone de réserve, et présentant:
- une surface sensiblement plane (36), s'étendant sur une longueur L et formant toboggan le long duquel ladite unique graine glisse progressivement jusqu'à sa libération ;
- un logement (35) définissant sensiblement un demi-cercle de rayon Ri et tangent au toboggan de la dent précédente, ledit logement (35) étant configuré pour maintenir ladite unique graine puis la guider vers ledit toboggan ;
- une pointe formant un bec, dont la partie supérieure définit sensiblement une portion d'ellipse recourbée vers ladite roue (23) dans le prolongement dudit toboggan (36), et la partie inférieure correspond à une portion supérieure dudit logement,
le rayon Ri étant compris entre 1 et10 mm et ladite longueur L valant au moins le triple dudit rayon Ri.

## Patentansprüche

1. Reguliervorrichtung (18a, 18b, 22) für eine Sämaschine, die dazu bestimmt ist, ein Säelement (12) einer Sämaschine mit Samenkörnern zu versorgen, und die dazu bestimmt ist, stromaufwärts zu Dosier- und Fördermitteln der Samenkörner montiert zu sein,
wobei die Reguliervorrichtung (18a, 18b, 22) eine Reservezone (22a) umfasst, die mit Samenkörnern (100) über einen Versorgungseingang versorgt wird, der an die Dosier- und Fördermittel angeschlossen ist,
wobei die Vorrichtung umfasst ein Rad (23), das geeignet ist, Samenkörner (100) aus der Reservezone (22a) mit Hilfe mindestens einer Reihe von Zähnen zu entnehmen, wobei jeder Zahn eingerichtet ist, um eine Entnahme eines einzigen Samenkorns aus der Reservezone zu gewährleisten, und umfassend:
- eine im Wesentlichen ebene Fläche (36), die sich auf einer Länge L erstreckt und eine Rutsche bildet;
- eine Aufnahme (35), die im Wesentlichen einen Halbkreis mit einem Radius Ri bildet, der die Rutsche des vorhergehenden Zahns tangiert;
- eine Spitze, die einen Schnabel bildet, wobei der obere Teil des Schnabels im Wesentlichen einen zum Rad (23) hin gekrümmten Ellipsenabschnitt in der Verlängerung der Rutsche (36) definiert, und wobei der untere Teil des Schnabels einem oberen Abschnitt der Aufnahme entspricht,
wobei der Radius Ri zwischen 1 und 10 mm beträgt, und wobei die Länge L gleich mindestens dem Dreifachen des Radius Ri entspricht,
**dadurch gekennzeichnet, dass** die Rutsche so geformt ist, dass das eine Samenkorn fortschreitend entlang der Rutsche bis zu seiner Ausgabe gleitet,
**und** dass die Aufnahme (35) eingerichtet ist, um das eine Samenkorn zu halten und dann zur Rutsche zu führen.

2. Reguliervorrichtung (18a, 18b, 22) für eine Sämaschine nach Anspruch 1, **dadurch gekennzeichnet, dass** das Rad (23) mindestens zwei Reihen von Zähnen (31, 32) umfasst, die durch einen Mittelraum (33) getrennt sind.

3. Reguliervorrichtung (18a, 18b, 22) für eine Sämaschine nach Anspruch 2, **dadurch gekennzeichnet, dass** die Zähne einer ersten Reihe (31) versetzt in Bezug zu den Zähnen einer zweiten Reihe (32) angeordnet sind.

4. Reguliervorrichtung (18a, 18b, 22) für eine Sämaschine nach einem der Ansprüche 1 bis 3, **dadurch gekennzeichnet, dass** jeder der Zähne mindestens eine Seitenwand (37, 38) mindestens auf einem Abschnitt der Aufnahme (35) aufweist.

5. Reguliervorrichtung (18a, 18b, 22) für eine Sämaschine nach einem der Ansprüche 1 bis 4, **dadurch gekennzeichnet, dass** das Rad (23) in Drehung von einem Motor (39) angetrieben wird, der sich zumindest teilweise innerhalb des Rades (23) befindet.

6. Reguliervorrichtung (18a, 18b, 22) für eine Sämaschine nach einem der Ansprüche 1 bis 5, **dadurch gekennzeichnet, dass** das Rad (23) unter einer Vielzahl von Rädern ausgewählt wird, die jeweils für einen Typ, eine Größe und/oder eine Dosis von zu befördernden Samenkörnern geeignet sind.

7. Reguliervorrichtung (18a, 18b, 22) für eine Sämaschine nach einem der Ansprüche 1 bis 6, **dadurch gekennzeichnet, dass** sie bewegliche Mittel zum Halten der Samenkörner in den Aufnahmen (35) der Zähne umfasst, die die Ausgabe jedes Samenkorns verzögern, wobei sie zwei Positionen einnehmen können:
- eine Position zum standardmäßigen Halten eines Samenkorns; und
- eine Position zur Ausgabe eines Samenkorns, wobei die Haltemittel vorübergehend verlagert werden, um vom Rad (23) entfernt zu sein.

8. Reguliervorrichtung (18a, 18b, 22) für eine Sämaschine nach Anspruch 7, **dadurch gekennzeichnet, dass** die beweglichen Haltemittel mindestens einen Besen (27) umfassen, der eine Anordnung von Borsten umfasst, von denen sich zumindest der freie Teil im Wesentlichen tangential zum Rad erstreckt.

9. Reguliervorrichtung (18a, 18b, 22) für eine Sämaschine nach einem der Ansprüche 1 bis 8, **dadurch gekennzeichnet, dass** der Versorgungseingang der Reserve eine geneigte Ebene (52) umfasst, die die Samenkörner zu einer Stufe (53) leiten, die im Wesentlichen auf halber Höhe der Reguliervorrichtung (18a, 18b, 22) ausgebildet ist, um die in der Reservezone (22a) ankommenden Samenkörner zu verlangsamen.

10. Sämaschine, umfassend eine Vielzahl von Säelementen (12),
wobei jedes Säelement (12) Dosier- und Fördermittel umfasst, die die Menge der Samenkörner am Ausgang eines Trichters (13) steuern und die Samenkörner in eine Verbindungsleitung (5) liefern, um Mittel zum Auslegen der Samenkörner zu versorgen,
wobei jedes Säelement (12) auch eine Reguliervorrichtung (18a, 18b, 22) umfasst, die zwischen den Dosier- und Fördermitteln und den Auslegemitteln in der Nähe dieser letztgenannten montiert ist,
wobei die Reguliervorrichtung (18a, 18b, 22) eine Reservezone (22a) umfasst, die mit Samenkörnern (100) über einen Versorgungseingang versorgt wird, der an die Dosier- und Fördermittel durch einen stromaufwärtigen Teil (24a) der Verbindungsleitung angeschlossen ist,
wobei die Reguliervorrichtung umfasst einen Eingang, der mit den Dosiermitteln verbunden ist, und einen Ausgang, der mit dem Säelement verbunden ist,
wobei die Reguliervorrichtung umfasst ein Rad (23), das geeignet ist, Samenkörner aus der Reservezone (22a) mit Hilfe mindestens einer Reihe von Zähnen zu entnehmen, wobei jeder Zahn eingerichtet ist, um eine Entnahme eines einzigen Samenkorns aus der Reservezone zu gewährleisten, und umfassend:
- eine im Wesentlichen ebene Fläche (36), die sich auf einer Länge L erstreckt und eine Rutsche bildet, entlang der das eine Samenkorn fortschreitend bis zu seiner Ausgabe gleitet;
- eine Aufnahme (35), die im Wesentlichen einen Halbkreis mit einem Radius Ri bildet, der die Rutsche des vorhergehenden Zahns tangiert, wobei die Aufnahme (35) eingerichtet ist, um das eine Samenkorn zu halten und dann zu der Rutsche zu leiten;
- eine Spitze, die einen Schnabel bildet, wobei der obere Teil des Schnabels im Wesentlichen einen zum Rad (23) hin gekrümmten Ellipsenabschnitt in der Verlängerung der Rutsche (36) definiert, und wobei der untere Teil des Schnabels einem oberen Abschnitt der Aufnahme entspricht,
wobei der Radius Ri zwischen 1 und 10 mm beträgt, und wobei die Länge L gleich mindestens dem Dreifachen des Radius Ri entspricht.

## Claims

1. A regulation device (18a, 18b, 22) for a seeder, for supplying seeds to a seeding element (12) of a seeder and for being mounted downstream of means for dosing and transporting seeds,
said regulation device (18a, 18b, 22) comprising a reserve zone (22a), supplied with seeds (100) via a supply inlet connected to said dosing and transport means,
the device comprising a wheel (23) capable of removing seeds (100) from said reserve zone (22a), by means of at least one row of teeth, each tooth being configured to ensure removal of a single seed from said reserve zone, and having:
- a substantially planar surface (36), extending over a length L and forming a slide;
- a housing (35) substantially defining a semicircle with a radius Ri and tangent to the slide of the preceding tooth;
- a tip forming a spout, the upper part of said spout substantially defining an ellipse portion bent towards said wheel (23), as an extension of said slide (36), and the lower part of said spout corresponding to an upper portion of said housing,
the radius Ri being comprised between 1 and 10 mm and in that said length L is at least three times said radius Ri,
**characterised in that** said slide is formed so that said single seed progressively slides along the slide until being released,
**and in that** the housing (35) is configured to hold said single seed and then guide the same towards said slide.

2. The regulation device (18a, 18b, 22) for a seeder according to claim 1, **characterised in that** said wheel (23) comprises at least two rows of teeth (31, 32) separated by a central gap (33).

3. The regulation device (18a, 18b, 22) for a seeder according to claim 2, **characterised in that** the teeth of a first row (31) are staggeredly arranged relative to the teeth of a second row (32).

4. The regulation device (18a, 18b, 22) for a seeder according to any of claims 1 to 3, **characterised in that** each of said teeth has at least one side wall (37, 38), at least over a portion of said housing (35).

5. The regulation device (18a, 18b, 22) for a seeder according to any of claims 1 to 4, **characterised in that** said wheel (23) is rotatably driven by a motor (39) at least partly located inside said wheel (23).

6. The regulation device (18a, 18b, 22) for a seeder according to any of claims 1 to 5, **characterised in that** said wheel (23) is selected from a plurality of wheels each adapted to a type, size and/or dose of seeds to be transported.

7. The regulation device (18a, 18b, 22) for a seeder according to any of claims 1 to 6, **characterised in that** it comprises movable means for retaining seeds inside said housings (35) of said teeth, delaying the release of each seed, which can assume two positions:
- a position for retaining a seed, by default; and
- a position for releasing a seed, said retaining means being temporarily moved to be remote from said wheel (23).

8. The regulation device (18a, 18b, 22) for a seeder according to claim 7, **characterised in that** said movable retaining means comprise at least one brush (27) comprising an assembly of bristles at least part of which extends substantially tangentially to the wheel.

9. The regulation device (18a, 18b, 22) for a seeder according to any one of claims 1 to 8, **characterised in that** said supply inlet of said reserve comprises a tilted plane (52), directing seeds towards a step (53) substantially formed at mid-height of said regulation device (18a, 18b, 22), so as to slow down seeds arriving into said reserve zone (22a).

10. A seeder comprising a plurality of seeding elements (12),
each seeding element (12) comprising dosing and transport means, controlling the throughput of the seeds at the outlet of a hopper (13) and delivering said seeds into a transfer duct (5) to supply means for sowing said seeds,
each seeding element (12) also comprising a regulation device (18a, 18b, 22) mounted between said dosing and transport means and said sowing means, in proximity to the latter,
the regulation device (18a, 18b, 22) comprising a reserve zone (22a), supplied with seeds (100) via a supply inlet connected to said dosing and transport means via an upstream part (24a) of said transfer duct,
said regulation device comprising an inlet connected to said dosing means and an outlet connected to said seeding element,
the regulation device comprising a wheel (23) capable of removing seeds from said reserve zone (22a), by means of at least one row of teeth, each tooth being configured to ensure removal of a single seed from said reserve zone, and having:
- a substantially planar surface (36), extending over a length L and forming a slide along which said single seed gradually slides until being released;
- a housing (35) substantially defining a semicircle with a radius Ri and tangent to the slide of the preceding tooth, said housing (35) being configured to hold said single seed and then guide the same towards said slide;
- a tip forming a spout, the upper part of which substantially defines an ellipse portion bent towards said wheel (23) as an extension of said slide (36), and the lower part corresponds to an upper portion of said housing
the radius Ri being between 1 and 10 mm and said length L being at least three times said radius Ri.
